# EUROPÄISCHE PATENTSCHRIFT

(11) **EP 4 143 452 B1**
(45) Veröffentlichungstag und Bekanntmachung des Hinweises auf die Patenterteilung: **02.07.2025**
(21) Anmeldenummer: 20725627.2
(22) Anmeldetag: 27.04.2020
(51) Int. Cl.: F16C 41/00, F16C 19/06, F16C 33/58

(54) **RADIALWÄLZLAGER UMFASSEND EINE ABLEITUNGSEINRICHTUNG UND VERFAHREN ZUR ABLEITUNG ELEKTROSTATISCHER LADUNGEN AN EINEM SOLCHEN RADIALWÄLZLAGER**
ANTI-FRICTION RADIAL BEARING COMPRISING A DISCHARGING DEVICE, AND METHOD FOR THE DISCHARGE OF ELECTROSTATIC CHARGES ON SUCH AN ANTI-FRITION BEARING
PALIER À ROULEMENT RADIAL COMPRENANT UN DISPOSITIF DE DÉCHARGE ET PROCÉDÉ DE DÉCHARGE DE CHARGES ÉLECTROSTATIQUES SUR UN TEL PALIER À ROULEMENT

(43) Veröffentlichungstag der Anmeldung: 08.03.2023
(73) Patentinhaber: Schunk Kohlenstofftechnik GmbH, 35452 Heuchelheim (DE)
(72) Erfinder: GAERTNER, Ralf, 35633 Lahnau (DE); WELLER, Steffen, 35586 Wetzlar (DE)
(74) Vertreter: advotec.
(86) Internationale Anmeldenummer: PCT/EP2020/061634
(87) Internationale Veröffentlichungsnummer: WO 2021/219194

(56) Entgegenhaltungen:
- EP-A1- 3 228 890
- WO-A1-2016/095959
- JP-U- H 048 820
- JP-U- H0 682 438

## Beschreibung

Die Erfindung betrifft ein Radialwälzlager umfassend eine Ableitungseinrichtung sowie ein Verfahren zur Ableitung elektrostatischer Ladungen an einem solchen Wälzlager.

Wälzlager der eingangs genannten Art sind aus dem Stand der Technik hinlänglich bekannt. Beispielsweise können Wälzlager Ableitungseinrichtungen aufweisen, die durch eine Vorrichtung ausgebildet sind, welche benachbart dem Wälzlager angeordnet sind. Nachteilig ist hierbei, dass derartige Vorrichtungen einen relativ großen Bauraum benötigen, der jedoch häufig nicht um das Wälzlager herum zur Verfügung steht.

Alternativ kann die Ableitungseinrichtung einen biegeelastischen Leiter umfassen, der zwischen dem ersten und dem zweiten Lagerring unter Ausbildung einer Vorspannung verklemmt ist, sodass die Ableitungsvorrichtung nicht aus dem Wälzlager hervorsteht und somit keinen zusätzlichen Bauraum benötigt. Dabei ist es erforderlich, dass der Leiter eine gekrümmte Form, beispielsweise eine U-Form, V-Form, Wellenform, Spiralform oder dergleichen aufweist, mit welchem der Leiter einen Raum zwischen den Lagerringen bei der Kontaktierung derselben überbrückt. Das Einsetzen des Leiters in das Wälzlager erfolgt dabei zwingend unter Ausbildung einer Vorspannung der Leiter, welche geeignet ist den Leiter an dem Wälzlager fest zu haltern.

Nachteilig ist dabei, dass ein Leiter jeweils passend für das entsprechende Wälzlager hergestellt werden und zudem eine entsprechend relativ komplexe Form aufweisen muss. Die Herstellung eines derartigen Leiters ist daher besonders aufwändig und dadurch kostenintensiv. Ein Leiter, der dabei zu groß bzw. zu weit für das Wälzlager angefertigt wurde, kann dann möglicherweise nicht in das Wälzlager geklemmt werden, wodurch eine Ableitung elektrostatischer Ladung an dem Wälzlager nicht möglich ist. Ein Leiter, der dagegen zu klein bzw. zu wenig weit für das Wälzlager angefertigt wurde, birgt die Gefahr eines Herausfallens und damit eines Kontaktverlustes der Ableitungseinrichtung mit dem Wälzlager während des Betriebes, wodurch ein Ableiten von elektrostatischer Ladung an dem Wälzlager abbricht. Dies birgt ein Risiko der Beschädigung des Wälzlagers durch nicht abgeleitete vagabundierende Ströme. Auch können Leiter, welche nicht exakt passend für das Wälzlager hergestellt wurden, mit einer zu großen Vorspannung in dem Wälzlager montiert sein. Auch kann es durch eine Montage der derart unpassenden Ableitungseinrichtung leichter zu einem Herausspringen des Leiters aus dem Wälzlager, beispielsweise durch eine zu große Vorspannung kommen, wodurch ebenfalls ein Kontaktverlust mit dem Wälzlager eintritt und das Ableiten elektrostatischer Ladungen an dem Wälzlager unterbunden wird.

Aus der JP H04 8820 U ist ein Wälzlager mit einer Ableitungseinrichtung mit den Merkmalen des Oberbegriffs des Anspruchs 1 bekannt. Weitere Wälzlager mit einer Ableitungseinrichtung zeigen die EP 3 228 890 A1 und die WO2016/095959 A1.

Es ist daher die Aufgabe der vorliegenden Erfindung ein Wälzlager umfassend eine Ableitungseinrichtung sowie ein Verfahren zur Ableitung elektrischer Ströme an dem Wälzlager vorzuschlagen, wobei die Ableitungseinrichtung einfach und kostengünstig herstellbar sowie sicher an dem Wälzlager montierbar und zugleich eine zuverlässige Ableitung elektrostatischer Ladungen an dem Wälzlager ermöglichen soll.

Diese Aufgabe wird durch ein Wälzlager mit den Merkmalen des Anspruchs 1 und ein Verfahren mit den Merkmalen des Anspruchs 16 gelöst.

Das erfindungsgemäße Wälzlager umfasst eine Ableitungseinrichtung, wobei die Ableitungseinrichtung zumindest einen biegeelastischen Leiter umfasst, wobei der Leiter einen ersten Leiterabschnitt und einen zweiten Leiterabschnitt zur Ausbildung einer Kontaktanordnung an dem Wälzlager aufweist, wobei der erste Leiterabschnitt an einem ersten Lagerring des Wälzlagers und der zweite Leiterabschnitt an einem zweiten Lagerring des Wälzlagers angelegt ist, wobei mittels des Leiters eine elektrisch leitende Verbindung zwischen dem ersten Lagerring und dem zweiten Lagerring hergestellt ist, wobei das Wälzlager ein Radiallager ist, und wobei der erste Lagerring ein Außenring und der zweite Lagerring ein Innenring ist, wobei der erste Leiterabschnitt ein Außenleiterabschnitt zur Kontaktierung des Außenrings des Radiallagers und der zweite Leiterabschnitt ein Innenleiterabschnitt zur Kontaktierung des Innenrings des Radiallagers ist, wobei der Leiter an dem Außenring gehaltert ist, wobei der Leiter mit dem ersten Leiterabschnitt in zumindest eine geradförmige Ausnehmung des Außenrings eingesetzt ist, wobei die geradförmige Ausnehmung als eine Nut an zumindest einer Stirnseite des Außenrings ausgebildet ist, oder wobei der erste Lagerring ein Innenring und der zweite Lagerring ein Außenring ist, wobei der erste Leiterabschnitt ein Innenleiterabschnitt zur Kontaktierung des Innenrings des Radiallagers und der zweite Leiterabschnitt ein Außenleiterabschnitt zur Kontaktierung des Außenrings des Radiallagers ist, wobei der Leiter an dem Innenring gehaltert ist, wobei der Leiter mit dem ersten Leiterabschnitt in zumindest eine geradförmige Ausnehmung des Innenrings eingesetzt ist, wobei die geradförmige Ausnehmung als eine Nut an zumindest einer Stirnseite des Innenrings ausgebildet ist.

Bei dem erfindungsgemäßen Wälzlager ist die Ableitungseinrichtung besonders einfach ausgebildet, wobei der Leiter nicht zwischen den Lagerringen des Wälzlagers verklemmt werden und damit keine komplexe Form aufweisen muss. Stattdessen ist erfindungsgemäß vorgesehen, dass der Leiter an dem ersten Lagerring fixiert ist, wobei der erste Leiterabschnitt des Leiters in eine dafür entsprechend geformte Ausnehmung des ersten Lagerrings eingesetzt ist. Der zweite Leiterabschnitt, welcher dagegen nicht in einer Ausnehmung gehaltert ist, kontaktiert dann den zweiten Lagerring des Wälzlagers, wobei der zweite Leiterabschnitt an dem zweiten Lagerring relativ frei beweglich sein kann. Die Anordnung der Ableitungseinrichtung an dem Wälzlager kann dabei derart erfolgen, dass der Leiter die Wälzköper nicht berührt und somit eine Funktionalität des Wälzlagers durch die Ableitungseinrichtung nicht beeinträchtigt ist. Erfindungsgemäß ist die Ausnehmung geradförmig ausgebildet und ist als eine Nut ausgebildet. Die Ausnehmung ist dann besonders einfach ausbildbar und kann auch nach der Fertigung des Wälzlagers einfach an diesem nachgerüstet werden. Ferner ist denkbar, dass nicht nur eine Ausnehmung sondern eine Mehrzahl Ausnehmungen an einem oder beiden Lagerringen des Wälzlagers ausgebildet sein können, welche einerseits eine flexible Anordnung eines Leiters an dem Wälzlager und andererseits ebenfalls eine Anordnung von zwei oder mehr Leitern der selben Ableitungseinrichtung an dem Wälzlager ermöglichen. Wesentlich ist dabei, dass kein Verklemmen des Leiters zwischen den Lagerringen notwendig ist, sodass das Risiko für ein Herausspringen des Leiters bei einem Betrieb des Wälzlagers minimiert wird.

Vorteilhaft kann die Ausnehmung mit dem Leiter übereinstimmend geformt ausgebildet sein. Die Ausnehmung ist dann passend zu dem entsprechenden Leiterquerschnitt ausgebildet, sodass innerhalb der Ausnehmung nur ein solcher Leiter eingesetzt und vorgesehen sein kann, welcher zur Ableitung entsprechend großer Ströme an dem Wälzlager geeignet ist. Die Ausnehmung kann dabei eine Zylinder- oder Teilzylinderform aufweisen, jedoch sind auch weitere Formen der Ausnehmung denkbar, welche geeignet sind, einen entsprechenden Leiter der Ableitungseinrichtung aufzunehmen. Ferner ist denkbar, dass die Ausnehmung in Form eines Keils oder als keilförmige Nut ausgebildet ist, sodass die Ausnehmung Leiter mit unterschiedlich großem Durchmesser aufnehmen kann und beispielsweise ein Verklemmen bzw. Fixieren des Leiters in der Ausnehmung ermöglicht.

Der Leiter kann in die Ausnehmung kraftschlüssig, formschlüssig und/oder stoffschlüssig eingesetzt sein. Dabei können die Leiter beim Einsetzten in die Ausnehmung verklemmt, verkeilt oder anderweitig kraftschlüssig und/oder formschlüssig an dieser befestigt sein. Ferner oder alternativ kann der Leiter im Bereich der Ausnehmung verklebt, verlötet oder anderweitig stoffschlüssig mit dem Lagerring verbunden sein. Durch eine derartige Befestigung des Leiters an dem ersten Lagerring im Bereich der Ausnehmung kann ein Herausfallen des Leiters aus der Ausnehmung wirkungsvoll verhindert werden, wodurch die Funktionalität der Ableitungseinrichtung zuverlässig gewährleistet werden kann.

Es ist von Vorteil, wenn der Leiter als eine Kohlenstofffaseranordnung aus einem Geflecht aus Kohlenstofffasern ausgebildet ist, wobei die Kohlenstofffaseranordnung mit pyrolytischem Kohlenstoff infiltriert sein kann. Derartige Leiter sind einfach herstellbar und können kostengünstig in großen Stückzahlen produziert werden. Auch kann durch eine Ausbildung des Leiters aus einer Kohlenstofffaseranordnung eine Trockenschmierung im Bereich der Kontaktierung erzielt werden. Zudem kann der Leiter durch eine Infiltration der Kohlenstofffaseranordnung mit pyrolytischem Kohlenstoff eine Formstabilität erhalten, welche durch den gewählten Grad der Infiltration benutzerdefiniert bei der Herstellung des Leiters eingestellt werden kann.

Der erste Leiterabschnitt kann durch ein Ende des Leiters ausgebildet sein, wobei der zweite Leiterabschnitt durch ein gegenüberliegendes, freies Ende des Leiters ausgebildet sein kann. In diesem Fall ist der erste Leiterabschnitt an dem ersten Lagerring befestigt und eine Kontaktierung des zweiten Lagerrings erfolgt mit dem zweiten Leiterbschnitt, welcher an einem nicht befestigten und damit freien Ende des Leiters ausgebildet sein kann. Der Leiter kann dabei insgesamt so lang ausgebildet sein, wie es die Strecke zwischen den Lagerringen des Wälzlagers erfordert, welche durch den Leiter überbrückt werden muss. In diesem Fall kann das freie Ende des Leiters den zweiten Lagerring direkt kontaktieren. Alternativ kann auch vorgesehen sein, dass der Leiter länger ist als die zu überbrückende Strecke, sodass nicht das freie Ende direkt, sondern ein etwas davon beanstandeter Teilabschnitt des zweiten Leiterabschnittes zur Kontaktierung des zweiten Lagerrings vorgesehen sein kann. Diese Kontaktierung kann dann tangential an dem zweiten Lagerring erfolgen.

Alternativ kann der erste Leiterabschnitt zwei Teilabschnitte an gegenüberliegenden Enden des Leiters umfassen, wobei die Teilabschnitte jeweils in Ausnehmungen des ersten Lagerrings eingesetzt sein können, wobei der zweite Leiterabschnitt zwischen den in den Ausnehmungen eingesetzten Teilabschnitten ausgebildet sein kann. In dieser Ausführungsform sind beide Enden des Leiters in Ausnehmungen des ersten Lagerrings fixiert, derart, dass ein zwischen den Enden des Leiters liegender Abschnitt den zweiten Leiterabschnitt zur Kontaktierung des zweiten Lagerrings ausbildet. Hierbei kann der erste Lagerring zumindest zwei Ausnehmungen zur Aufnahme der Teilabschnitte des ersten Leiterabschnitts aufweisen. Durch eine derartige Befestigung des Leiters an beiden Enden kann eine besonders stabile Fixierung des Leiters an dem ersten Lagerring erzielt werden. Dadurch, dass keine freien Enden des Leiters den zweiten Leiterabschnitts direkt kontaktieren, kann zudem ein Ausfransen der Enden des Leiters vermieden werden. Damit kann eine Standzeit eines Wälzlagers mit einem derartigen Leiter der Ableitungseinrichtung deutlich verlängert werden.

Vorteilhaft kann der Leiter gerad- oder bogenförmig sein. Derartig geformte Leiter können beispielsweise von einer Rolle bzw. von einem Strang in einer gewünschten Länge einfach, schnell und in großen Stückzahlen geschnitten werden. Die Leiter können beispielsweise eine Kohlenstofffaseranordnung aufweisen oder alternativ auch als ein Draht ausgebildet sein, vorzugsweise aus einem Metalldraht, beispielsweise ein Kupferdraht. Nach dem Zuschnitt kann der Leiter beschichtet oder unbeschichtet direkt in dem Wälzlager angeordnet werden.

Ferner ist von Vorteil, wenn mittels des Leiters eine Kontaktkraft auf den zweiten Lagerring ausübbar ist. Dabei kann der Leiter flexibel bzw. elastisch ausgebildet und derart an dem Wälzlager angeordnet sein, dass der Leiter die Kontaktkraft ausbildet. Die Kontaktkraft kann beispielsweise in Form einer Federkraft des Leiters bewirkt sein, die dadurch zustande kommt, dass der Leiter aufgrund seiner Stabilität bzw. Elastizität als Blattfeder innerhalb des Wälzlagers fungiert. Durch die Ausübung der Kontaktkraft kann ein Kontaktverlust des an dem ersten Lagerring befestigten Leiters mit dem zweiten Lagerring vermieden werden.

Zudem kann die Kontaktkraft durch eine Vorspannung des Leiters bewirkt sein, wobei der Leiter unter Ausbildung der Vorspannung an den Lagerringen angeordnet sein kann. Hierbei kann vorgesehen sein, dass die Ausnehmung derart ausgebildet ist, dass sie den Leiter zur Ausbildung der Vorspannung in Richtung des zweiten Lagerringes ausrichtet. Ein entsprechender Winkel der geradförmigen Ausnehmung an dem ersten Lagerring kann dabei so eingestellt sein, dass dieser nicht dem Winkel eines bloßen Anlegens des Leiters an dem zweiten Lagerring entspricht. Wesentlich ist, dass der Leiter nach dem Anordnen an dem Wälzlager, d.h. nach dem Einsetzen in die Ausnehmung des ersten Lagerrings und dem Anlegen an dem zweiten Lagerring, eine Vorspannung erhält, welche beispielsweise durch ein leichtes Verbiegen des Leiters erreicht wird. Durch die Vorspannung kann der Leiter dann die Kontaktkraft auf den zweiten Leiterabschnitt am zweiten Lagerring ausüben. Dadurch kann wiederum eine sichere Kontaktierung der Lagerringe des Wälzlagers durch den Leiter gewährleistet werden.

Erfindungsgemäß ist das Wälzlager ein Radiallager, wobei der erste Leiterabschnitt ein Außenleiterabschnitt zur Kontaktierung eines Außenrings des Radiallagers und der zweite Leiterabschnitt ein Innenleiterabschnitt zur Kontaktierung eines Innenrings des Radiallagers ist oder umgekehrt, wobei der Leiter an dem Außenring oder an dem Innenring gehaltert ist, wobei der Leiter mit dem ersten Leiterabschnitt in zumindest eine Ausnehmung des Außenrings oder des Innenrings eingesetzt ist. Als ein Radiallager wird hier ein Rillenkugellager, ein Schrägkugellager, ein Vierpunktlager, ein Schulterkugellager, ein Pendelkugellager, ein Zylinderrollenlager, ein Kegelrollenlager, ein Tonnenrollenlager, ein Pendelrollenlager, ein Nadellager, ein Toroidalrollenlager, ein Kugelrollenlager oder ein Spannringlager verstanden.

Dabei kann mittels des zweiten Leiterabschnitts ein Außenumfang des Innenrings oder ein Innenumfang des Außenrings kontaktierbar sein, wobei der zweite Leiterabschnitt an eine radiale Nut des Innenrings oder des Außenrings angelegt sein kann. Der zweite Leiterabschnitt kann dann beweglich an dem Außenumfang des Innenrings oder dem Innenumfang des Außenrings angeordnet sein, jedoch in Richtung der Lagerachse durch die Nut fixiert sein. Die Nut kann dabei mit dem Leiter übereinstimmend geformt ausgebildet sein. Durch eine Ausbildung der Nut entsprechend der Form des Leiters kann ein Verrutschen bzw. Herausrutschen des Leiterabschnitts aus der Nut wirkungsvoll verhindert werden. Das Anlegen des zweiten Leiterabschnitts an die Nut kann zudem mit den zweiten Leiterabschnitt entweder an einem Ende des Leiters oder an einem Abschnitt zwischen den Enden des Leiters erfolgen.

Der Leiter kann tangential am Innenring und/oder sekantial zum Außenring angeordnet sein. Wenn der Leiter tangential am Innenring angeordnet ist, kann der zweite Leiterabschnitt des Leiters tangential am Innenring angelegt sein, wobei der erste Leiterabschnitt des Leiters am Außenring gehaltert sein kann. Alternativ kann der zweite Leiterabschnitt des Leiters sekantial zum Außenring angeordnet sein, wobei dann der erste Leiterabschnitt des Leiters am Innenring gehaltert sein kann.

Erfindungsgemäß ist die Ausnehmung als eine Nut an zumindest einer Stirnseite des Außenrings oder des Innenrings ausgebildet. Zudem können zwei oder mehr Ausnehmungen an einer Stirnseite des Außenrings oder des Innenrings ausgebildet sein. Auch können die Ausnehmungen an einer oder an beiden Stirnseiten des Außenrings oder Innenrings angeordnet sein. Die Ausnehmungen können dabei als eine Nut ausgebildet sein. Wesentlich ist, dass die Ausnehmung geradförmig ausgebildet sind und damit nicht radial zur Lagerachse an dem Außenring oder Innenring verläuft.

Vorteilhaft kann die Ableitungseinrichtung zwei oder mehr Leiter in einer Leiteranordnung umfassen, wobei die ersten Leiterabschnitte der Leiter jeweils in Ausnehmungen des ersten Lagerrings eingesetzt sein können. Der erste Lagerring kann dann eine entsprechende Anzahl Ausnehmungen zur Befestigung der Leiter an dem ersten Lagerring aufweisen. Hierbei ist denkbar, dass auch zunächst nur ein Leiter in eine der Ausnehmungen eingesetzt sein kann und bei einem Bedarf ein, zwei oder mehr weitere Leiter in Ausnehmungen des ersten Lagerrings eingesetzt werden können. Auch können zugleich mehrere Leiter an dem ersten Lagerring befestigt sein. Dabei kann eine Montage der Leiter gleichsam durch ein Einsetzen der ersten Leiterabschnitte in Ausnehmungen des ersten Lagerrings erfolgen, was die Montage der Ableitungseinrichtung sehr einfach gestaltet. Zudem kann die Verwendung von zwei oder mehr Leitern in einer Leiteranordnung das Beschädigungsrisiko des Wälzlagers durch vagabundierende Ströme wesentlich verringern, da selbst bei einem Verschleiß bzw. Herausfallen eines Leiter zumindest ein weiterer funktionsfähiger Leiter zur Ableitung elektrostatischer Ladungen an dem Wälzlagers zur Verfügung steht.

Die Leiter können dabei identisch ausgebildet und rotationssymmetrisch bezogen auf eine Lagerachse des Wälzlagers an den Lagerringen angeordnet sein. Wenn die Leiter der Ableitungseinrichtung identisch ausgebildet sind, können diese besonders einfach hergestellt und bei der Montage an den Lagerringen des Wälzlagers auch nicht verwechselt und dadurch falsch befestigt werden. Eine derartig vereinfachte Montage erhöht gleichsam die Sicherheit bei dem Betrieb des Wälzlagers, da eine Kontaktierung der Lagerringe mit identisch ausgebildeten Leitern stets gewährleistet ist. Dadurch, dass die Leiter rotationssymmetrisch an den Lagerringen angeordnet sein können, kann zudem eine gleichmäßige Kontaktierung der Lagerringe des Wälzlagers und somit eine gleichmäßige Ableitung elektrischer Ströme bewirkt werden.

Zudem können die Leiter achsensymmetrisch bezogen auf einen Durchmesser der Lagerringe an den Lagerringen angeordnet sein. Dies kann dann der Fall sein, wenn der erste Leiterabschnitt zwei Teilabschnitte aufweist, die jeweils an den ersten Lagerringen Ausnehmungen eingesetzt sein können, sodass der zweite Leiterabschnitt zwischen den in den Ausnehmungen eingesetzten Teilabschnitten an dem Leiter ausgebildet sein kann.

Alternativ können die Leiter achsenasymmetrisch bezogen auf einen Durchmesser der Lagerringe an den Lagerringen angeordnet sein. In diesem Fall können die Leiter an nur einem Ende an dem ersten Lagerring fixiert sein, sodass ein freies Ende den zweiten Leiterabschnitt ausbilden kann.

Das erfindungsgemäße Verfahren dient der Ableitung elektrostatischer Ladung an einem Wälzlager, wobei das Wälzlager eine Ableitungseinrichtung mit zumindest einem biegeelastischen Leiter umfasst, wobei der Leiter mit einem ersten Leiterabschnitt und einem zweiten Leiterabschnitt zur Ausbildung einer Kontaktanordnung an dem Wälzlager ausgebildet wird, wobei der erste Leiterabschnitt an einem ersten Lagerring des Wälzlagers und der zweite Leiterabschnitt an einem zweiten Lagerring des Wälzlagers angelegt wird, wobei der Leiter eine elektrisch leitende Verbindung zwischen dem ersten Lagerring und dem zweiten Lagerring herstellt, wobei der Leiter an dem ersten Lagerring gehaltert wird, wobei der erste Leiterabschnitt in zumindest eine geradförmige Ausnehmung des ersten Lagerrings eingesetzt wird, wobei das Wälzlager ein Radiallager ist, wobei der erste Leiterabschnitt ein Außenleiterabschnitt zur Kontaktierung eines Außenrings des Radiallagers und der zweite Leiterabschnitt ein Innenleiterabschnitt zur Kontaktierung eines Innenrings des Radiallagers ist, wobei der Leiter an dem Außenring oder an dem Innenring gehaltert wird, wobei der Leiter mit dem ersten Leiterabschnitt in zumindest eine Ausnehmung des Außenrings oder des Innenrings eingesetzt wird, wobei die Ausnehmung als eine Nut an zumindest einer Stirnseite des Außenrings oder des Innenrings ausgebildet wird. Die vorteilhaften Wirkungen des erfindungsgemäßen Verfahrens betreffend wird auf die Vorteilsbeschreibung des erfindungsgemäßen Wälzlagers verwiesen. Vorteilhafte Ausführungsformen des Verfahrens ergeben sich aus den Merkmalsbeschreibungen der auf den Vorrichtungsanspruch 1 rückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: Eine perspektivische Darstellung eines Wälzlagers in einer ersten Ausführungsform;
- **Fig. 2**: eine perspektivische Darstellung eines Wälzlagers in einer zweiten Ausführungsform.

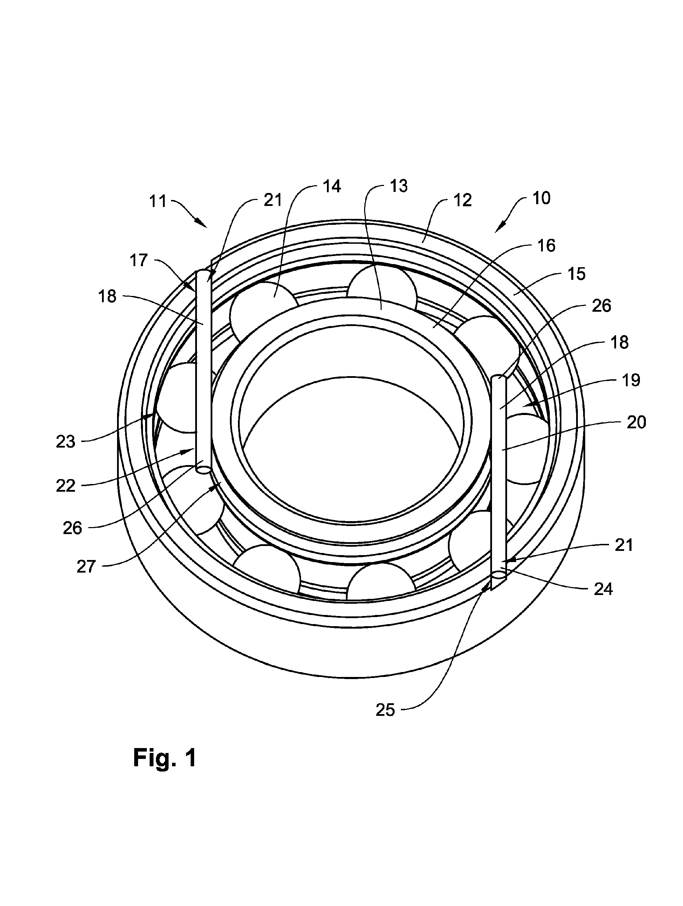

**Fig. 1** zeigt ein Wälzlager 10 in Form eines Kugellagers 11, welches einen ersten Lagerring 12 und einen zweiten Lagerring 13 sowie zwischen den Lagerringen 12,13 angeordnete Wälzkörper 14 umfasst. Der erste Lagerring 12 ist dabei ein Außenring 15 des Wälzlagers 10, der zweite Lagerring 13 ein Innenring 16 des Wälzlagers 10. Ferner umfasst das Wälzlager 10 eine Ableitungseinrichtung 17, wobei die Ableitungseinrichtung 17 zwei Leiter 18 in einer Leiteranordnung 19 umfasst. Die Leiter 18 sind dabei als Kohlenstofffaseranordnung 20 ausgebildet, wobei die Kohlenstofffaseranordnung 20 mit pyrolytischem Kohlenstoff infiltriert ist. Die Leiter 18 weisen jeweils einen ersten Leiterabschnitt 21 und einen zweiten Leiterabschnitt 22 zur Ausbildung einer Kontaktanordnung 23 an dem Wälzlager 10 auf. Dabei ist der erste Leiterabschnitt 21 jeweils durch ein Ende 24 eines Leiters 18 ausgebildet, wobei das Ende 24 in eine geradförmige Ausnehmung 25 des ersten Lagerrings 12 eingesetzt ist. Ein gegenüberliegendes Ende 26 des Leiters 18 bildet den zweiten Leiterabschnitt 22 aus, wobei das Ende 26 des Leiters 18 in eine radialen Nut 27 des zweiten Lagerrings eingelegt ist. Der zweite Leiterabschnitt 22 ist dabei innerhalb der Nut 27 beweglich angeordnet, wohingegen der erste Leiterabschnitt 21 in der Ausnehmung 25 fest fixiert ist. Durch diese Anordnung der Leiterabschnitte 21, 22 kann mittels des Leiters 18 eine elektrisch leitende Verbindung zwischen den Lagerringen 12, 13 hergestellt werden, wodurch elektrostatische Ladungen an dem Wälzlager 10 abgeleitet werden können ohne dass zusätzlicher Bauraum um das Wälzlager 10 benötigt wird.

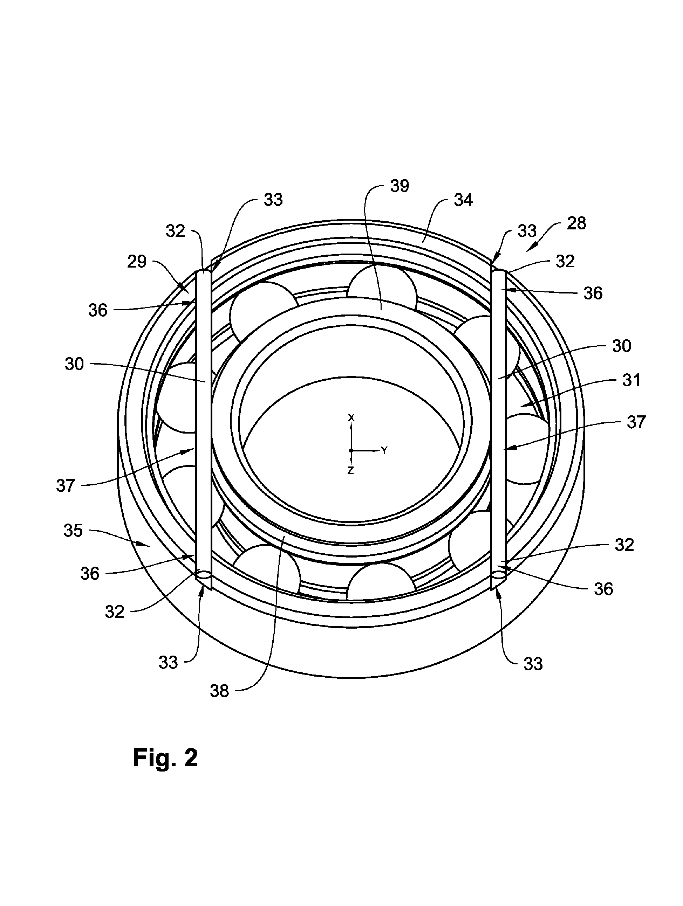

Im Unterschied zur **Fig. 1** zeigt **Fig. 2** ein Wälzlager 28 mit einer Ableitungseinrichtung 29, wobei die Ableitungseinrichtung 29 zwei Leiter 30 in einer Leiteranordnung 31 umfasst, wobei die Leiter 30 jeweils an gegenüberliegenden Enden 32 der Leiter 30 in Ausnehmungen 33 eines ersten Lagerrings 34 des Wälzlagers 28 eingesetzt sind. Dadurch wird jeweils ein erster Leiterabschnitt 35 jedes Leiters 30 durch zwei Teilabschnitte 36 an den gegenüberliegenden Enden 32 des Leiters 30 ausgebildet. Ein zweiter Leiterabschnitt 37 des Leiters 30 wird jeweils zwischen den Teilabschnitten 36 des Leiters 30 ausgebildet. Auch hier ist der zweite Leiterabschnitt 37 in eine Nut 38 eines zweiten Lagerrings 39 des Wälzlagers 28 angelegt. Dabei ist der zweite Leiterabschnitt 37 innerhalb der Nut 38 ebenfalls beweglich angeordnet, wohingegen die Teilabschnitte 36 des ersten Leiterabschnitts 35 in den Ausnehmungen 33 fixiert sind.

## Patentansprüche

1. Wälzlager (10, 28) umfassend eine Ableitungseinrichtung (17, 29), wobei die Ableitungseinrichtung zumindest einen biegeelastischen Leiter (18, 30) umfasst, wobei der Leiter einen ersten Leiterabschnitt (21, 35) und einen zweiten Leiterabschnitt (22, 37) zur Ausbildung einer Kontaktanordnung (23) an dem Wälzlager aufweist, wobei der erste Leiterabschnitt an einem ersten Lagerring (12, 34) des Wälzlagers und der zweite Leiterabschnitt an einem zweiten Lagerring (13, 39) des Wälzlagers angelegt ist, wobei mittels des Leiters eine elektrisch leitende Verbindung zwischen dem ersten Lagerring und dem zweiten Lagerring hergestellt ist, wobei das Wälzlager ein Radiallager ist, und wobei:
a) der erste Lagerring ein Außenring (15) und der zweite Lagerring ein Innenring (16) ist, wobei der erste Leiterabschnitt ein Außenleiterabschnitt zur Kontaktierung des Außenrings (15) des Radiallagers und der zweite Leiterabschnitt ein Innenleiterabschnitt zur Kontaktierung des Innenrings (16) des Radiallagers ist, wobei der Leiter an dem Außenring gehaltert ist, wobei der Leiter mit dem ersten Leiterabschnitt in zumindest eine geradförmige Ausnehmung (25, 33) des Außenrings eingesetzt ist,
**dadurch gekennzeichnet,**
**dass** die geradförmige Ausnehmung als eine Nut an zumindest einer Stirnseite des Außenrings ausgebildet ist, oder
b) der erste Lagerring ein Innenring (15) und der zweite Lagerring ein Außenring (16) ist, wobei der erste Leiterabschnitt ein Innenleiterabschnitt zur Kontaktierung des Innenrings (15) des Radiallagers und der zweite Leiterabschnitt ein Außenleiterabschnitt zur Kontaktierung des Außenrings (16) des Radiallagers ist, wobei der Leiter an dem Innenring gehaltert ist, wobei der Leiter mit dem ersten Leiterabschnitt in zumindest eine geradförmige Ausnehmung des Innenrings eingesetzt ist,
**dadurch gekennzeichnet,**
**dass** die geradförmige Ausnehmung als eine Nut an zumindest einer Stirnseite des Innenrings ausgebildet ist.

2. Wälzlager nach Anspruch 1,
**dadurch gekennzeichnet,**
**dass** die geradförmige Ausnehmung (25, 33) mit dem Leiter (18, 30) übereinstimmend geformt ausgebildet ist.

3. Wälzlager nach Anspruch 1 oder 2,
**dadurch gekennzeichnet,**
**dass** der Leiter (18, 30) in die geradförmige Ausnehmung (25, 33) kraftschlüssig, formschlüssig und/oder stoffschlüssig eingesetzt ist.

4. Wälzlager nach einem der vorangehenden Ansprüche,
**dadurch gekennzeichnet,**
**dass** der Leiter (18, 30) als eine Kohlenstofffaseranordnung (20) aus einem Geflecht aus Kohlenstofffasern ausgebildet ist, wobei die Kohlenstofffaseranordnung mit pyrolytischem Kohlenstoff infiltriert ist.

5. Wälzlager nach einem der vorangehenden Ansprüche,
**dadurch gekennzeichnet,**
**dass** der erste Leiterabschnitt (21) durch ein Ende (24) des Leiters (18) ausgebildet ist, wobei der zweite Leiterabschnitt (22) durch ein gegenüberliegendes, freies Ende (26) des Leiters ausgebildet ist.

6. Wälzlager nach einem der Ansprüche 1 bis 4,
**dadurch gekennzeichnet,**
**dass** der erste Leiterabschnitt (35) zwei Teilabschnitte (36) an gegenüberliegenden Enden (32) des Leiters (30) umfasst, wobei die Teilabschnitte jeweils in den geradförmigen Ausnehmungen (33) des ersten Lagerrings (34) eingesetzt sind, wobei der zweite Leiterabschnitt (37) zwischen den in den Ausnehmungen eingesetzten Teilabschnitten ausgebildet ist.

7. Wälzlager nach einem der vorangehenden Ansprüche,
**dadurch gekennzeichnet,**
**dass** der Leiter (18, 30) gerad- oder bogenförmig ist.

8. Wälzlager nach einem der vorangehenden Ansprüche,
dadurch**gekennzeichnet,**
dass mittels des Leiters (18, 30) eine Kontaktkraft auf den zweiten Lagerring (13, 39) ausübbar ist.

9. Wälzlager nach Anspruch 8,
**dadurch gekennzeichnet,**
**dass** die Kontaktkraft durch eine Vorspannung des Leiters (18, 30) bewirkt ist, wobei der Leiter unter Ausbildung der Vorspannung an den Lagerringen (12, 13, 34, 39) angeordnet ist.

10. Wälzlager nach einem der vorangehenden Ansprüche,
**dadurch gekennzeichnet,**
**dass** mittels des zweiten Leiterabschnitts (22, 37) ein Außenumfang des Innenrings (16) oder ein Innenumfang des Außenrings (15) kontaktierbar ist, wobei der zweite Leiterabschnitt an eine radiale Nut (27, 38) des Innenrings oder des Außenrings angelegt ist.

11. Wälzlager nach einem der vorangehenden Ansprüche,
**dadurch gekennzeichnet,**
**dass** der Leiter (18, 30) tangential am Innenring (16) und/oder sekantial zum Außenring (15) angeordnet ist.

12. Wälzlager nach einem der vorangehenden Ansprüche,
**dadurch gekennzeichnet,**
**dass** die Ableitungseinrichtung (17, 29) zwei oder mehr Leiter (18, 30) in einer Leiteranordnung (19, 31) umfasst, wobei die ersten Leiterabschnitte (21, 35) der Leiter jeweils in die geradförmige Ausnehmungen (25, 33) des ersten Lagerrings (12, 34) eingesetzt sind.

13. Wälzlager nach Anspruch 12,
**dadurch gekennzeichnet,**
**dass** die Leiter (18, 30) identisch ausgebildet und rotationssymmetrisch bezogen auf eine Lagerachse des Wälzlagers (10, 28) an den Lagerringen (12, 13, 34, 39) angeordnet sind.

14. Wälzlager nach Anspruch 12 oder 13,
dadurch**gekennzeichnet,**
dass die Leiter (30) achsensymmetrisch bezogen auf einen Durchmesser der Lagerringe (34, 39) an den Lagerringen angeordnet sind.

15. Wälzlager nach Anspruch 12 oder 13,
**dadurch gekennzeichnet,**
**dass** die Leiter (18) achsenasymmetrisch bezogen auf einen Durchmesser der Lagerringe (12, 13) an den Lagerringen angeordnet sind.

16. Verfahren zur Ableitung elektrostatischer Ladungen an einem Wälzlager (10, 28), wobei das Wälzlager eine Ableitungseinrichtung (17, 29) mit zumindest einem biegeelastischen Leiter (18, 30) umfasst, wobei der Leiter mit einem ersten Leiterabschnitt (21, 35) und einem zweiten Leiterabschnitt (22, 37) zur Ausbildung einer Kontaktanordnung (23) an dem Wälzlager ausgebildet wird, wobei der erste Leiterabschnitt an einen ersten Lagerring (12, 34) des Wälzlagers und der zweite Leiterabschnitt an einen zweiten Lagerring (13, 39) des Wälzlagers angelegt wird, wobei der Leiter eine elektrisch leitende Verbindung zwischen dem ersten Lagerring und dem zweiten Lagerring herstellt, wobei das Wälzlager ein Radiallager ist, und wobei:
a) der erste Lagerring ein Außenring (15) und der zweite Lagerring ein Innenring (16) ist, wobei der erste Leiterabschnitt ein Außenleiterabschnitt zur Kontaktierung des Außenrings (15) des Radiallagers und der zweite Leiterabschnitt ein Innenleiterabschnitt zur Kontaktierung des Innenrings (16) des Radiallagers ist, wobei der Leiter an dem Außenring gehaltert ist, wobei der Leiter mit dem ersten Leiterabschnitt in zumindest eine geradförmige Ausnehmung (25, 33) des Außenrings eingesetzt ist,
**dadurch gekennzeichnet,**
**dass** die geradförmige Ausnehmung als eine Nut an zumindest einer Stirnseite des Außenrings ausgebildet ist, oder
b) der erste Lagerring ein Innenring (15) und der zweite Lagerring ein Außenring (16) ist, wobei der erste Leiterabschnitt ein Innenleiterabschnitt zur Kontaktierung des Innenrings (15) des Radiallagers und der zweite Leiterabschnitt ein Außenleiterabschnitt zur Kontaktierung des Außenrings (16) des Radiallagers ist, wobei der Leiter an dem Innenring gehaltert ist, wobei der Leiter mit dem ersten Leiterabschnitt in zumindest eine geradförmige Ausnehmung des Innenrings eingesetzt ist,
**dadurch gekennzeichnet,**
**dass** die geradförmige Ausnehmung als eine Nut an zumindest einer Stirnseite des Innenrings ausgebildet ist.

## Claims

1. A roller bearing (10, 28) comprising a conduction apparatus (17, 29), the conduction apparatus comprising at least one elastic conductor (18, 30), the conductor having a first conductor section (21, 35) and a second conductor section (22, 37) for forming a contact assembly (23) on the roller bearing, the first conductor section being mounted on a first bearing ring (12, 34) of the roller bearing and the second conductor section being mounted on a second bearing ring (13, 39) of the roller bearing, an electrically conductive connection being established between the first bearing ring and the second bearing ring by means of the conductor, the roller bearing being a plain bearing, and:
a) the first bearing ring is an outer ring (15) and the second bearing ring is an inner ring (16), the first conductor section being an outer conductor section for establishing contact with the outer ring (15) of the plain bearing and the second conductor section being an inner conductor section for establishing contact with an inner ring (16) of the plain bearing, the conductor being supported at the outer ring, the conductor being inserted in at least one straight recess (25, 33) of the outer ring by its first conductor section,
**characterized in that**
the straight recess is realized as a groove on at least a front face of the outer ring or
b) that the first bearing ring inner ring (15) and the second bearing ring is an outer ring (16), the first conductor section being an inner conductor section for establishing contact with the inner ring (15) of the plain bearing and the second conductor section being an outer conductor section for establishing contact with an outer ring (16) of the plain bearing, the conductor being supported at the inner ring, the conductor being inserted in at least one straight recess of the inner ring by its first conductor section,
**characterized in that**
the straight recess is realized as a groove on at least a front face of the inner ring.

2. The roller bearing according to claim 1,
**characterized in that**
the recess (25, 33) is formed so as to conform with the conductor (18, 30).

3. The roller bearing according to claim 1 or 2,
**characterized in that**
the conductor (18, 30) is inserted into the straight recess (25, 33) in a force-fit, form-fit or substance-to-substance bonded manner.

4. The roller bearing according to any one of the preceding claims,
**characterized in that**
the conductor (18, 30) is realized as a carbon fiber assembly (20) made of a braid of carbon fibers, the carbon fiber assembly being infiltrated with pyrolytic carbon.

5. The roller bearing according to any one of the preceding claims, **characterized in that**
the first conductor section (21) is formed by an end (24) of the conductor (18), the second conductor section (22) being formed by an opposite, free end (26) of the conductor.

6. The roller bearing according to any one of the claims 1 to 4,
**characterized in that**
the first conductor section (35) comprises two partial sections (36) on opposite ends (32) of the conductor (30), the partial sections each being inserted in the straight recesses (33) of the first bearing ring (34), the second conductor section (37) being formed between the partial sections inserted in the recesses.

7. The roller bearing according to any one of the preceding claims, **characterized in that**
the conductor (18, 30) is straight or curved.

8. The roller bearing according to any one of the preceding claims, **characterized in that**
a contact force is exerted on the second bearing ring (13, 39) by means of the conductor (18, 30).

9. The roller bearing according to claim 8
the contact force is caused by prestressing the conductor (18, 30), the conductor being disposed on the bearing rings (12, 13, 34, 39) by producing the prestressing.

10. The roller bearing according to any one of the preceding claims, **characterized in that**
an outer periphery of the inner ring (16) or an inner periphery of the outer ring (15) is contacted by means of the second conductor section (22, 37), the second conductor section being supported on a radial groove (27, 38) of the inner ring or the outer ring.

11. The roller bearing according to any one of the preceding claims, **characterized in that**
the conductor (18, 30) is tangential to the inner ring (16) and/or secantial to the outer ring (15).

12. The roller bearing according to any one of the preceding claims, **characterized in that**
the conduction apparatus (17, 29) comprises two or more conductors (18, 30) in a conductor assembly (19, 31), the first conductor sections (21, 35) of the conductors each being inserted in the straight recesses (25, 33) of the first bearing ring (12, 34).

13. The roller bearing according to claim 12,
**characterized in that**
the conductor (18, 30) is identical and is disposed on the bearing rings (12, 13, 34, 39) in a rotationally symmetric manner with respect to a bearing axis of the roller bearing (10, 28).

14. The roller bearing according to claim 12 or 13,
**characterized in that**
the conductor (30) is disposed on the bearing rings (34, 39) in an axially symmetric manner with respect to a diameter of the bearing rings.

15. The roller bearing according to claim 12 or 13,
**characterized in that**
the conductors (18) are disposed on the bearing rings (12, 13) in an axially symmetric manner with respect to a diameter of the bearing rings.

16. A method for conducting electrostatic charges at a roller bearing (10, 28), the roller bearing comprising a conduction apparatus (17, 29) comprising at least one elastic conductor (18, 30), the conductor being formed to have a first conductor section (21, 35) and a second conductor section (22, 37) for forming a contact assembly (23) on the roller bearing, the first conductor section being mounted on a first bearing ring (12, 34) of the roller bearing and the second conductor section being mounted on a second bearing ring (13, 39) of the roller bearing, the conductor establishing an electrically conductive connection between the first bearing ring and the second bearing ring, the roller bearing being a plain bearing, and:
a) the first bearing ring is an outer ring (15) and the second bearing ring is an inner ring (16), the first conductor section being an outer conductor section for establishing contact with the outer ring (15) of the plain bearing and the second conductor section being an inner conductor section for establishing contact with an inner ring (16) of the plain bearing, the conductor being supported at the outer ring, the conductor being inserted in at least one straight recess (25, 33) of the outer ring by its first conductor section
**characterized in that**
the straight recess is realized as a groove on at least a front face of the outer ring or
b) that the first bearing ring inner ring (15) and the second bearing ring is an outer ring (16), the first conductor section being an inner conductor section for establishing contact with the inner ring (15) of the plain bearing and the second conductor section being an outer conductor section for establishing contact with an outer ring (16) of the plain bearing, the conductor being supported at the inner ring, the conductor being inserted in at least one straight recess of the inner ring by its first conductor section,
**characterized in that**
the straight recess is realized as a groove on at least a front face of the inner ring.

## Revendications

1. Palier à rouleau (10, 28) comprenant un dispositif d'évacuation (17, 29), le dispositif d'évacuation comprenant au moins un conducteur (18, 30) élastique, le conducteur ayant une première partie de conducteur (21, 35) et une deuxième partie de conducteur (22, 37) pour former un ensemble de contact (23) sur le palier à rouleau, la première partie de conducteur étant montée sur un premier anneau (12, 34) du palier à rouleau et la deuxième partie de conducteur étant montée sur un deuxième anneau (13, 39) du palier à rouleau, une connexion électriquement conductrice étant établie entre le premier anneau de palier et le deuxième anneau de palier au moyen du conducteur, le palier à rouleau étant un palier lisse, et :
a) le premier anneau de palier est un anneau extérieur (15) et le deuxième anneau de palier est un anneau intérieur (16), la première partie de conducteur étant une partie de conducteur extérieur pour établir le contact avec l'anneau extérieur (15) du palier lisse et la deuxième partie de conducteur étant une partie de conducteur intérieur pour établir le contact avec l'anneau intérieur (16) du palier lisse, le conducteur étant supporté à l'anneau extérieur, le conducteur étant inséré dans au moins un évidement (25, 33) droit de l'anneau extérieur par sa première partie de conducteur,
**caractérisé en ce que**
l'évidement droit est réalisé comme rainure sur au moins une face avant de l'anneau extérieur ou
b) le premier anneau de palier est un anneau intérieur (15) et le deuxième anneau de palier est un anneau extérieur (16), la première partie de conducteur étant une partie de conducteur intérieur pour établir le contact avec l'anneau intérieur (15) du palier lisse et la deuxième partie de conducteur étant une partie de conducteur extérieur pour établir le contact avec l'anneau extérieur (16) du palier lisse, le conducteur étant supporté à l'anneau intérieur, le conducteur étant inséré dans au moins un évidement droit de l'anneau intérieur par sa première partie de conducteur,
**caractérisé en ce que**
l'évidement droit est réalisé comme rainure sur au moins une face avant de l'anneau intérieur.

2. Palier à rouleau selon la revendication 1,
**caractérisé en ce que**
l'évidement (25, 33) droit est formé de manière à se conformer au conducteur (18, 30).

3. Palier à rouleau selon la revendication 1 ou la revendication 2,
**caractérisé en ce que**
le conducteur (18, 30) est inséré dans l'évidement (25, 33) droit de manière à s'adapter à la force, à la forme ou à la substance.

4. Palier à rouleau selon l'une quelconque des revendications précédentes,
**caractérisé en ce que**
le conducteur (18, 30) est réalisé sous la forme d'un ensemble (20) de fibres de carbone constitué d'une tresse de fibres de carbone, l'ensemble de fibres de carbone étant infiltré de carbone pyrolytique.

5. Palier à rouleau selon l'une quelconque des revendications précédentes,
**caractérisé en ce que**
la première partie de conducteur (21) est formée par une extrémité (24) du conducteur (18), la deuxième partie de conducteur (22) étant formée par une extrémité (26) libre, opposée du conducteur.

6. Palier à rouleau selon l'une quelconque des revendications 1 à 4, **caractérisé en ce que**
la première partie de conducteur (35) comprend deux parties partielles (36) aux extrémités (32) opposées du conducteur (30), les parties partielles étant insérées chacune dans les évidements (33) droits du premier anneau de palier (34), la deuxième partie de conducteur (37) étant formée entre les parties partielles insérées dans les évidements.

7. Palier à rouleau selon l'une quelconque des revendications précédentes,
**caractérisé en ce que**
le conducteur (18, 30) est droit ou en forme d'arc.

8. Palier à rouleau selon l'une quelconque des revendications précédentes,
**caractérisé en ce**
**qu'**une force de contact est exercée sur le deuxième anneau de palier (13, 39) au moyen du conducteur (18, 30).

9. Palier à rouleau selon la revendication 8
la force de contact est provoquée par la précontrainte du conducteur (18, 30), le conducteur étant disposé sur les anneaux de palier (12, 13, 34, 39) en produisant la précontrainte.

10. Palier à rouleau selon l'une quelconque des revendications précédentes,
**caractérisé en ce**
**qu'**une périphérie extérieure de l'anneau intérieur (16) ou une périphérie intérieure de l'anneau extérieur (15) est mise en contact au moyen de la deuxième partie de conducteur (22, 37), la deuxième partie de conducteur étant supportée à une rainure radiale (27, 38) de l'anneau intérieur ou de l'anneau extérieur.

11. Palier à rouleau selon l'une quelconque des revendications précédentes,
**caractérisé en ce que**
le conducteur (18, 30) est tangentiel à l'anneau intérieur (16) et/ou sécantiel à l'anneau extérieur (15).

12. Palier à rouleau selon l'une quelconque des revendications précédentes,
**caractérisé en ce que**
le dispositif d'évacuation (17, 29) comprend deux ou plusieurs conducteurs (18, 30) dans un ensemble de conducteurs (19, 31), les premières parties (21, 35) des conducteurs étant chacune insérée dans les évidements (25, 33) droits du premier anneau de palier (12, 34).

13. Palier à rouleau selon la revendication 12,
**caractérisé en ce que**
le conducteur (18, 30) est identique et est disposé sur les anneaux de palier (12, 13, 34, 39) de manière symétrique à la rotation par rapport à un axe d'appui du palier à rouleau (10, 28).

14. Palier à rouleau selon la revendication 12 ou la revendication 13, **caractérisé en ce que**
le conducteur (30) est disposé sur les anneaux de palier (34, 39) de manière axialement symétrique par rapport à un diamètre des anneaux de palier.

15. Palier à rouleau selon la revendication 12 ou la revendication 13, **caractérisé en ce que**
les conducteurs (18) sont disposés sur les anneaux de palier (12, 13) de manière axialement symétrique par rapport au diamètre des anneaux de palier.

16. Procédé pour évacuer des charges électrostatiques à un palier à rouleau (10, 28), le palier à rouleau comprenant un dispositif d'évacuation (17, 29) comprenant au moins un conducteur (18, 30) élastique, le conducteur ayant une première partie de conducteur (21, 35) et une deuxième partie de conducteur (22, 37) pour former un ensemble de contact (23) sur le palier à rouleau, la première partie de conducteur étant montée sur un premier anneau (12, 34) du palier à rouleau et la deuxième partie de conducteur étant montée sur un deuxième anneau (13, 39) du palier à rouleau, le conducteur établissant une connexion électriquement conductrice entre le premier anneau de palier et le deuxième anneau de palier, le palier à rouleau étant un palier lisse, et :
a) le premier anneau de palier est un anneau extérieur (15) et le deuxième anneau de palier est un anneau intérieur (16), la première partie de conducteur étant une partie de conducteur extérieur pour établir le contact avec l'anneau extérieur (15) du palier lisse et la deuxième partie de conducteur étant une partie de conducteur intérieur pour établir le contact avec l'anneau intérieur (16) du palier lisse, le conducteur étant supporté à l'anneau extérieur, le conducteur étant inséré dans au moins un évidement (25, 33) droit de l'anneau extérieur par sa première partie de conducteur,
**caractérisé en ce que**
l'évidement droit est réalisé comme rainure sur au moins une face avant de l'anneau extérieur ou
b) le premier anneau de palier est un anneau intérieur (15) et le deuxième anneau de palier est un anneau extérieur (16), la première partie de conducteur étant une partie de conducteur intérieur pour établir le contact avec l'anneau intérieur (15) du palier lisse et la deuxième partie de conducteur étant une partie de conducteur extérieur pour établir le contact avec l'anneau extérieur (16) du palier lisse, le conducteur étant supporté à l'anneau intérieur, le conducteur étant inséré dans au moins un évidement droit de l'anneau intérieur par sa première partie de conducteur,
**caractérisé en ce que**
l'évidement droit est réalisé comme rainure sur au moins une face avant de l'anneau intérieur.
